# EUROPÄISCHE PATENTSCHRIFT

(11) **EP 0 997 843 B1**
(45) Veröffentlichungstag und Bekanntmachung des Hinweises auf die Patenterteilung: **18.09.2002**
(21) Anmeldenummer: 99121291.1
(22) Anmeldetag: 26.10.1999
(51) Int. Cl.: G06K 19/077, G01V 15/00, H01F 27/40, H01F 5/04

(54) **Transponderanordnung und Verfahren zur Herstellung einer Transponderanordnung**
Transponder arrangement and method for the production of a transponder arrangement
Dispositif transpondeur et méthode de fabrication d'un dispositif transpondeur

(30) Priorität: 29.10.1998 DE 19849903
(43) Veröffentlichungstag der Anmeldung: 03.05.2000
(73) Patentinhaber: AEG Identifikationssysteme GmbH, 89077 Ulm (DE)
(72) Erfinder: Baeger, Holm Dr., 89134 Blaustein (DE)
(74) Vertreter: Weber, Gerhard, Dipl.-Phys.

(56) Entgegenhaltungen:
- WO-A-98/40766
- CH-A- 669 079
- DE-A- 19 509 999
- US-A- 5 281 855

## Beschreibung

Die Erfindung betrifft eine Transponderanordnung und ein Verfahren zur Herstellung einer Transponderanordnung.

Für Transponderanordnungen, welche eine Spulenanordnung und eine Elektronikbaugruppe enthalten, sind beispielsweise in der DE 195 23 521 mehrere Varianten angegeben, insbesondere die direkte Kontaktierung der Spulenenden auf Kontaktflächen einer Elektronikbaugruppe durch Drahtbonden, die Verbindung von Spule und getrennt angeordneter Elektronikbaugruppe über gesonderte Bonddrähte oder die Anordnung der Elektronikbaugruppe auf dem Spulenkörper und Kontaktierung über Kontaktfahnen, Bonddrähte, Leitkleberverbindungen, Flip-Chip-Technik usw.

Aus der WO 98/40766 A1 ist ein Transponder bekannt, bei welchem ein kreiszylindrischer Trägerkörper mit nichtleitender Oberfläche, vorzugsweise ein Ferritkörper, an einem Ende mit einer Metallisierungsschicht versehen wird, die in zwei getrennteTeilflächen aufgeteilt wird. Der Trägerkörper dient zugleich als Spulenkörper für eine Drahtspule, deren Wicklungsenden mit den metallisierten Teilflächen verbunden werden. Die metallisierten Teilflächen dienen zugleich als Kontaktflächen für einen elektronischen Transponder-Schaltkreis.

Die DE 15 09 999 zeigt einen Transponderaufbau, bei welchem auf einem isolierenden Folienträger ein Substrat mit mehreren Leiterbahnen ausgebildet ist. Das Substrat trägt ein oder mehrere elektronische Bauelemente und wird mit einem Spulenträgerkörper verbunden, aufweichen eine Drahtspule aufgewickelt wird. Die Spulenenden werden mit Leiterflächen des Substrats verbunden.

In der CH 669 079 A ist ein Verfahren zur Herstellung einer Transponderanordnung beschrieben, bei welchem eine Schaltungsplatine mehrere Leiterbahnen aufweist. Die Leiterbahnen ragen teilweise über den Platinenrand hinaus und sind dort mit Kontaktflächen eines integrierten Transponderschaltkreises verbunden. Eine fertig gewickelte Spule wird in eine Aussparung der Platine eingeklebt und die Drahtenden der Spule werden mit Leiterbahnen der Platine elektrisch verbunden.

Aufgabe der vorliegenden Erfindung ist es, eine besonders vorteilhaft aufgebaute Transponderanordnung sowie ein Verfahren zur Herstellung einer solchen Transponderanordnung anzugeben.

Die Erfindung ist im Patentanspruch 1 bzw. Patentanspruch 19 beschrieben. Die Unteransprüche enthalten vorteilhafte Ausgestaltungen und Weiterbildungen der Erfindung.

Die erfindungsgemäße Transponderanordnung bietet den Vorteil, daß weitgehend auf Techniken aus der Großserienherstellung von Spulen zurückgegriffen werden kann und dadurch eine kostengünstige Herstellung möglich ist. Insbesondere kann auf der sogenannten Lead-Frame-Technik bei der Herstellung aufgebaut werden. Die erfindungsgemäße Transponderanordnung ist darüberhinaus kompakt, robust und einfach handhabbar.

Die Kontaktierung der Spulenenden mit den Leiterstegen ermöglicht zum einen die Beibehaltung der aus der Spulenherstellung vorliegenden Fertigungseinrichtungen ohne die Notwendigkeit von Sonderanfertigungen von Maschinen für den gesamten Herstellungsprozeß. Lediglich für zusätzliche Prozeßschritte werden ergänzende Maschinenmodule benötigt, welche aber wie an Beispielen noch aufgezeigt, einfach in vorhandene Prozeßabläufe integrierbar sind.

Zum anderen erlaubt die Kontaktierung der Spulenenden mit den Leiterstegen die Verwendung einfachen kostengünstigen Drahtmaterials, welches nicht die besondere Eigenschaft der Bondfähigkeit besitzen muß, wie dies bei Direktkontaktierung mit Kontaktflächen eines Elektroniksubstrats der Fall ist. Ferner stellt die Kontaktierung der Wicklungsenden mit den Leiterstegen geringere Präzisionsanforderungen an die Herstellungseinrichtungen als Bondverbindungen auf Kontaktflächen eines Elektroniksubstrats und es können für die gesamte Drahthandhabung herkömmliche Wickelmaschinen eingesetzt werden.

Die mechanisch in dem Spulenkörper verankerten Leiterstege bieten neben den Vorteilen bei der Herstellung der Transponderanordnung auch noch Vorteile in der Handhabung, indem die Leiterstege zugleich zur Befestigung der Transponderanordnung auf einem Träger dienen können. Hierbei kann zusätzlich vorgesehen sein, über die Leiterstege elektrische Verbindungen zu externen elektrischen Einrichtungen herzustellen und die Transponderanordnung nicht oder nicht nur passiv, d.h. mit Leistungsversorgung der Elektronikbaugruppe über die Spule aus einem externen Abfragefeld, sondern aktiv mit eigener Leistungsversorgung der externen elektrischen Einrichtungen zu betreiben und dadurch die Leistungsmerkmale des Transponderbetriebs durch zusätzliche Fähigkeiten wie Verschlüsselungstechniken zu erweitern und/oder die Abfragereichweite zu erhöhen.

Für die Elektronikbaugruppe können an sich beliebige Realisierungsformen benutzt werden, insbesondere auch die gebräuchlichen Ausführungsformen, bei welchen auf einem Substrat mit den Halbleiterschaltungen der Elektronikbaugruppe auch zugleich Kontaktflächen, insbesondere mit metallischer, beispielsweise vergoldeter Oberfläche vorgesehen sind.

Gemäß einer ersten Variante können die elektrischen Verbindungen zwischen Leiterstegen und Elektronikbaugruppe durch direkte Kontaktierung der Leiterstege mit Kontakten der Elektronikbaugruppe gebildet sein. in einer ersten Ausführungsform kann die Elektronikbaugruppe auf dem Spulenkörper befestigt, beispielsweise aufgeklebt werden und die Leiterstege werden zu der Elektronikbaugruppe hin umgebogen und mit dieser kontaktiert.

Eine bevorzugte Ausführungsform sieht vor, daß die Leiterstege Kontaktfahnen aufweisen, mit denen die Elektronikbaugruppe kontaktiert wird. Die Kontaktfahnen können insbesondere von den zur Kontaktierung mit den Wicklungsenden vorgesehenen Stegabschnitten seitlich aufeinander zuweisend abstehen und einen Spalt zwischen sich aufweisen, der klein ist gegen den Abstand der die Wicklungsenden aufnehmenden Stegabschnitte. Die Kotaktfahnen können auch teilweise in dem Spulenkörper geführt sein. Die Elektronikbaugruppe überbrückt dann den Spalt zwischen den gegenüberstehenden Kontaktfahnen.

Die Elektronenbaugruppe kann nach an sich bekannten Verfahren mit den Kontaktfahnen elektrisch und mechanisch verbunden werden, insbesondere beispielsweise mit einer nichtleitenden Klebeverbindung und späterem Löten, mittels eines isotropen oder anisotropen Leitklebers, mittels Löten (Pulslöten, Reflow-Löten, Tauchlöten, Schwallöten), mittels Schweißen (Thermokompression, Punktschweißen, Laserschweißen) oder Kombinationen solcher Maßnahmen.

Weitere Zweipol-Bauelemente wie beispielsweise Kondensatoren, Dioden usw. der Transponderanordnung, welche nicht in die Elektronikbaugruppe integriert sind und in ihrer elektrischen Beschaltung gleichfalls mit einem Wicklungsende zu verbinden sind, können dann in gleicher Weise mit den Kontaktfahnen verbunden werden.

Die Verbindung der Elektronikbaugruppe und ggf. weiterer Bauelemente mit den Kontaktfahnen kann vor oder bevorzugt nach dem Wickeln der Spule erfolgen. Die Herstellung der Lötverbindungen mit den Kontaktfahnen kann vorteilhafterweise zusammen mit einer Verlötung der Wicklungsenden auf den Leiterstegen vorgenommen werden.

Eine andere Variante sieht vor, die Elektronikbaugruppe mit den Leiterstegen nicht direkt zu kontaktieren, sondern ein Brückenmodul zur leitenden Verbindung zu benutzen. Ein solches Brückenmodul kann insbesondere zwei getrennte Leiterstrukturen enthalten, welche jeweils einerseits mit der Elektronikbaugruppe und andererseits mit den Leiterstegen verbunden sind. Für die Verbindung mit der Elektronikbaugruppe und ggf. weiteren Zweipol-Bauelementen können die bei der Ausführungsform mit den Kontaktfahnen der Leiterstege angeführten Maßnahmen im wesentlichen in entsprechender Weise vorgenommen werden. Die Brückenmodule mit Elektronikbaugruppe können insbesondere vorteilhafterweise auch in Lead-Frame-Technik hergestellt werden. Das Brückenmodul mit Elektronikbaugruppe kann vorteilhafterweise separat fertiggestellt und danach mit den Leiterstegen verbunden werden, wobei die Verbindung mit den Leiterstegen sowohl vor Wickeln der Spule als auch danach erfolgen kann.

Bevorzugt weist das Brückenmodul in jeder von zwei Anschluß-Leiterstrukturen eine Öffnung auf, welche über die Leiterstege gesteckt werden. Dabei kann vorteilhafterweise bereits beim Aufstecken der Module auf die Leiterstege eine elektrische Verbindung durch einen Klemmkontakt hergestellt werden, indem beispielsweise die Öffnungen in wenigstens einer Richtung ein geringes Untermaß ihrer lichten Weite gegenüber dem Querschnitt der Leiterstege aufweisen. In einer vorteilhaften Ausführungsform können die Leiterstrukturen der Brückenmodule durch Blechausschnitte gebildet sein. Die Ränder der Öffnungen können dann nach einer Seite aufgewölbt sein, was das Aufstecken erleichtert und zugleich eine Sicherung gegen ein Abziehen des Moduls von den Leiterstegen bietet. Bei klemmendem Aufstecken kann der durch die Klemmkraft, die gleitende Bewegung und ein eventuelles Einschneiden der Öffnungskanten in die Leiterstege und/oder umgekehrt für einen dauerhaften Kontakt ausreichen, so daß ein nachfolgendes Löten entbehrlich sein kann.

In einer weiteren Variante kann die Elektronikbaugruppe auf dem Spulenkörper befestigt sein und eine elektrische Verbindung zu den Leiterstegen über Federkontaktzungen erfolgen, welche einerseits auf die Leiterstege gesteckt sind und dort vorzugsweise klemmend gehalten sind und andererseits federnd auf Kontaktflächen der Elektronikbaugruppe anliegen.

Die Elektronikbaugruppe kann vorteilhafterweise mit einer Vergußmasse in an sich gebräuchlicher Weise vergossen sein, was zum einen einen Schutz der Elektronikbaugruppe selbst und zum anderen auch eine Fixierung nicht verlöteter Kontakte, insbesondere federnd anliegender Kontakte bewirkt.

Eine Fixierung kann gemäß einer vorteilhaften Ausführung auch erfolgen, indem in einem topfförmigen Gehäuse eine Vergußmasse am Topfboden angebracht und die Anordnung von Spule mit in Richtung des Topfbodens weisender Elektronikbaugruppe eingesetzt wird. Die noch nicht ausgehärtete Vergußmasse umschließt die Anordnung zumindest im Bereich des Topfbodens und bewirkt nach Verfestigen eine zuverlässige Fixierung der umschlossenen Baugruppen.

Die Leiterstege ragen insbesondere wegen der Herstellung der Anordnung beidseitig über den Spulenkörper hinaus. Elektronikbaugruppe und Wicklungsenden können an den selben oder an den entgegengesetzten Leiterstegenden mit diesen verbunden sein.

Die Erfindung ist nachfolgend anhand von Ausführungsbeispielen unter Bezugnahme auf die Abbildungen noch eingehend veranschaulicht. Dabei zeigt:
- Fig. 1: ein Lead-Frame-Band mit vorgeformten Leiterstegen
- Fig. 2: das Band von Fig. 1 nach Ausformung von Spulenkörpern
- Fig. 3: einen Querschnitt durch eine Spulenanordnung
- Fig. 4, 5: Transponderanordnungen mit Kontaktfahnen an Leiterstegen
- Fig. 6, 7: Lead-Frame-Anordnungen von Brückenmodulen
- Fig. 8, 9: Transponderanordnungen mit aufgesteckten Brückenmodulen
- Fig. 10: eine Transponderanordnung mit umgebogenen Leiterstegenden
- Fig. 11: eine Transponderanordnung mit Federkontakten und Gehäuse

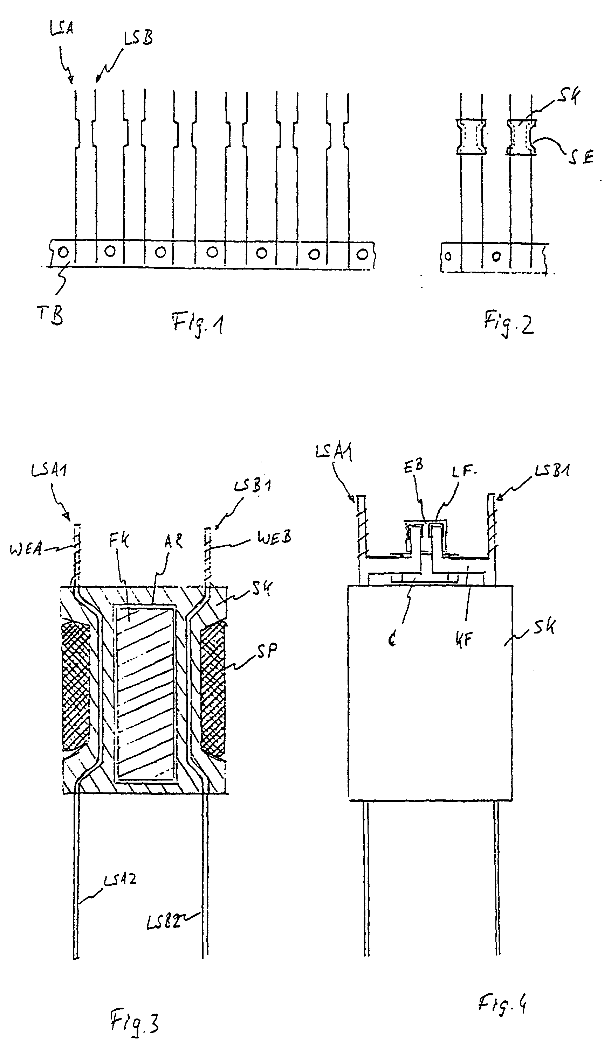

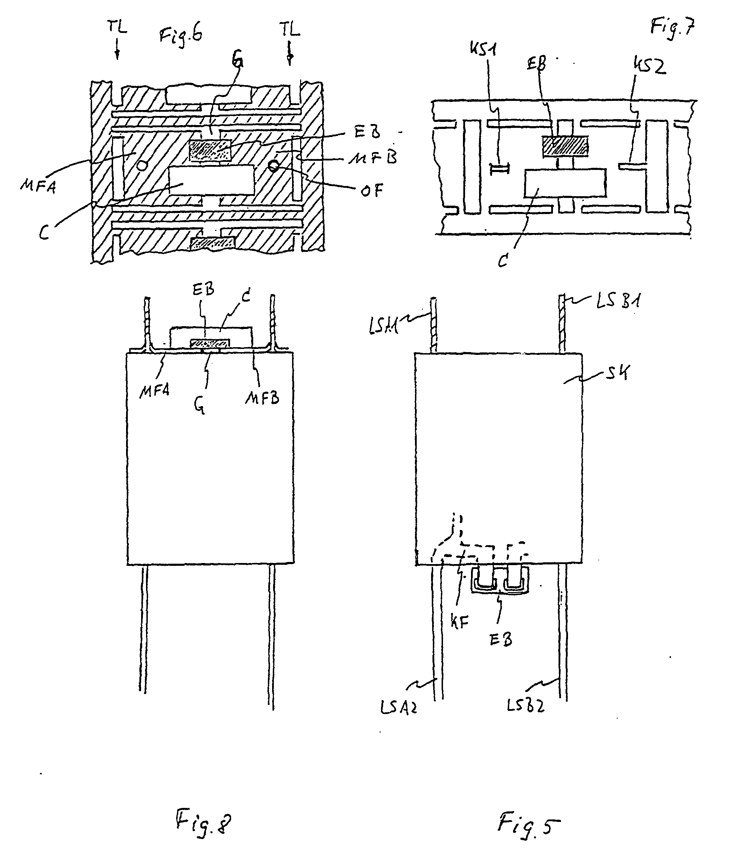

In Fig. 1 bis Fig. 3 ist ein an sich bekannter Fertigungsausschnitt zur Herstellung von gewickelten Spulen skizziert. Die ais Lead-Frames oder als an einem Band TB gegurtete Drähte in Form von Rollenmaterial vorliegenden Leiterstege für die Spulen sind paarweise einander zugeordnet und im Bereich der zu formenden Spulenkörper mit einander zugewandten Einzügen gegen den sonst geraden Verlauf versehen. In einem nicht dargestellten Formwerkzeug werden um paarweise zugeordnete Leiterstege LSA, LSB jeweils Spulenkörper SK geformt, insbesondere mittels eines Spritzgießverfahrens (Fig. 2). Die Leiterstege können dabei an ihrem dem eingezeichneten Band TB abgewandten Ende in einem zweiten Band gehalten sein, von welchem sie nach Ausformung der Spulenkörper getrennt werden.

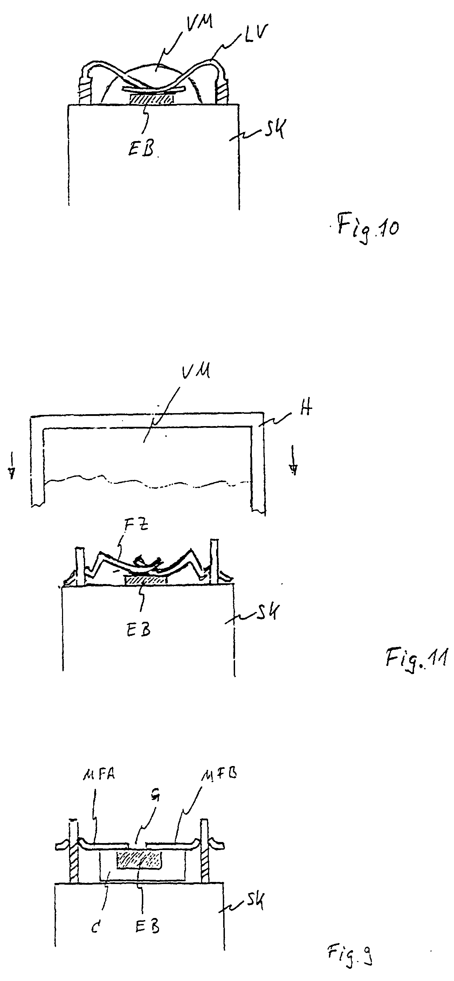

Die Spulenkörper zeigen in ihrer Außenkontur Einbuchtungen SE, in welche eine Drahtspule SP gewickelt wird. Die Wicklungsenden WEA und WEB des Spulendrahts sind um die freien Enden LSA1 und LSB1 der Leiterstege LSA, LSB gewunden und entweder bereits durch den Wickelprozeß nach Art der Wire-Wrap-Technik und/oder in einem nachfolgenden Lötprozeß mit den Leiterstegen elektrisch leitend kontaktiert. Während des Wickelprozesses sind die anderen Enden LSA2 und LSB2 der Leiterstege unverändert mit dem Band TB verbunden. Der Spulenkörper SK kann in einem Aufnahmeraum AR einen Ferritkörper FK enthalten, der vorzugsweise schnappend in den entsprechend ausgestalteten Aufnahmeraum vor Wickeln der Spule eingesetzt ist. Spulenanoranungen der in Fig. 3 skizzierten Art sind an sich bekannt und insbesondere in Ausführung mit einem umgebenden Gehäuse gebräuchlich. Die Leiterstegenden LSA2 und LSB2 dienen als elektrische Zuleitungen.

Die nachfolgend erläuterten Ausführungen der erfindungsgemäßen Transponderanordnung bauen auf Fertigung und Form von Spulen der in Fig. 1 bis Fig. 3 skizzierten Art auf. In den nachfolgenden Figuren sind Spule und Spulenkörper lediglich vereinfacht als Rechteck oder Rechteckabschnitt dargestellt

Bei der in Fig. 4 skizzierten Ausführungsform weisen die als Lead-Frame-Strukturen ausgeführten Leiterstege an ihren freien, für die Kontaktierung der Wicklungsenden vorgesehenen Stegenden LSA1, LSB1 jeweils spulenkörperseitig eine von zwei in den zwischen ihnen liegenden Raum ragende, aufeinander zuweisende Kontaktfahnen KF auf, die mit den zugehörigen Leiterstegen jeweils eine einstückige metallische Struktur bilden. Zwischen den gegenüberstehenden Kanten der beiden Kontaktfahnen ist ein Spalt G frei. Eine Elektronikbaugruppe EB, insbesondere ein integrierter Schaltkreis mit Leiterflächen LF auf einer isolierenden Substratfläche ist mit der die Leiterfläche tragenden Seite den beiden Kontaktfahnen zugewandt und den Spalt G überbrückend so positioniert, daß je eine der beiden Leiterflächen LF einer der Kontaktfahnen KF gegenübersteht.

Für die Herstellung elektrisch leitender Verbindungen zwischen Leiterflächen LF und Kontaktfahnen KF sind verschiedene an sich bekannte Maßnahmen anwendbar. Beispielsweise kann die Elektronikbaugruppe mittels eines nichtleitenden Klebers auf den Kontaktfahnen befestigt werden und elektrisch leitende Verbindungen werden in einem nachfolgenden Lötprozeß, beispielsweise in einem Lötschwallbad hergestellt, was besonders vorteilhaft ist, wenn im selben Lötschritt auch eine Verlötung von Wicklungsenden mit den Leiterstegenden vorgenommen werden kann. Eine andere Verbindungstechnik kann die Verwendung eines Leitklebers, insbesondere eines anisotropen Leitklebers vorsehen, so daß mit der Verklebung auch bereits die elektrischen Verbindungen entstehen. Elektrische Verbindungen können auch durch Laserschweißen, Reibschweißen oder andere an sich bekannte Maßnahmen hergestellt werden. Bei geringem Abstand der Leiterflächen kann auch die selbstausrichtende Flip-Chip-Verbindungstechnik vorteilhaft sein.

Ein weiteres Zweipolelement wie beispielsweise ein Kondensator C ist gleichfalls spaltüberbrückend mit den Kontaktfahnen mechanisch und elektrisch verbunden. Während die Elektronikbaugruppe an stegparallelen Längsabschnitten der Kontaktfahnen befestigt ist, ist der wesentlich breiter gebaute Kondensator an Querabschnitten der Kontaktfahnen kontaktiert. Durch die gewinkelte Form der Kontaktfahnen wird die spulenkörpernahe Umwicklung der Leiterstegenden mit den Wicklungsenden nicht behindert. Die Wicklung der Spule kann vor oder nach Befestigung der Elektronikbaugruppe und ggf. weiterer Bauelemente an den Kontaktfahnen erfolgen.

Bei der in Fig. 5 skizzierten Ausführungsform sind die Kontaktfahnen im Bereich der den freien Leiterstegenden abgewandten Stirnseite des Spulenkörpers bei den Leiterstegenden LSA2, LSB2 vorgesehen. Ferner sind bei der skizzierten Form die Kontaktfahnen teilweise innerhalb des Spulenkörpers geführt.

Für die Ausführungsformen der Erfindung, bei welchen die elektrische Verbindung der Elektronikbaugruppe nicht durch direkte Kontaktierung mit den Leiterstegen sondern über ein Brückenmodul erfolgt, zeigen Fig. 6 und Fig. 7 beispielhaft zwei Möglichkeiten der Herstellung solcher Brückenmodule in der vorteilhaften Lead-Frame-Technik. Ein Brückenmodul enthalte dabei zwei Metallflächenausschnitte MFA, MFB als Teile einer Struktur eines Lead-Frame-Bandes. Zwischen den paarweise zugeordneten Metallflächen MFA, MFB ist ein freier Spalt G, der durch die Elektronikbaugruppe EB und eventuell weitere Zweipol-Bauelemente je einen Kondensator C überbrückt ist. Für Anordnung von Elektronikbaugruppe EB und Kondensator C sowie Techniken zur elektrischen und/oder mechanischen Verbindung wird auf die Erläuterungen zu den analog anwendbaren Maßnahmen bei den Ausführungsformen mit den Kontaktfahnen verwiesen.

In der Ausführungsform nach Fig. 6 sind einander zugeordnete Metallflächen MFA, MFB quer zur Bandrichtung des Lead-Frame-Bandes benachbart angeordnet. Jede der Metallflächen weist eine Öffnung OF auf. Der Abstand der Öffnungen eines Metallfächenpaares ist gleich dem Abstand der Leiterstegenden. Durch Auftrennen der Bandstruktur entlang der durch Pfeile angedeuteten Trennlinien TL können die Module vereinzelt werden. Die Metallflächen eines Moduls bleiben durch Elektronikbaugruppe EB und ggf. Kondensator C usw. mechanisch verbunden. Zusätzlich kann ein nichtleitendes Trägerband auf der der Elektronikbaugruppe abgewandten Seite der Metallflächen vorgesehen sein.

Die Öffnungen OF können beispielsweise ein Übermaß gegenüber dem Querschnitt der Leiterstegenden einschließlich der auf diese gewickelten Wicklungsenden aufweisen und dann ohne Gefahr der Beschädigung der Wicklungsenden über die Leiterstegenden gesteckt und beispielsweise durch Löten mit den Leiterstegenden elektrisch verbunden werden. Die Wicklung kann auch nach Aufstecken der Brückenmodule auf die Leiterstegenden hergestellt werden.

Die Öffnungen OF können auch ein Untermaß gegenüber dem Querschnitt der Leiterstege aufweisen und mit den Öffnungsrändern aufgewölbt oder beim Aufstecken auf die Leiterstegenden aufwölbbar sein. Durch das Untermaß erfolgt das Aufstecken unter Verformung des Querschnitts von Öffnungen und/oder Leitungerstegenden, so daß das aufgesteckte Modul klemmend gehalten ist. Durch das Aneinandergleiten der Öffnungsränder der Metallflächen MFA, MFB an den Leiterstegen werden eventuell vorhandene oberflächliche Verunreinigungen zuverlässig entfernt und es entsteht ein guter elektrischer Kontakt, eventuell auch in Form einer Kaltverschweißung, der eine zusätzliche Verlötung entbehrlich machen kann. Die Aufwölbung der Öffnungsränder in Verbindung mit der Aufweitung der Öffnung und/oder Verstärkung der Aufwölbung beim Aufstecken bietet eine hohe Sicherheit gegen eine Abziehen oder Abrutschen des Brückenmoduls von den Leiterstegenden.

Das klemmende Aufstecken des Brückenmoduls auf die Leiterstegenden kann beispielsweise gemäß der in Fig. 8 skizzierten Ausführungsform vor dem Wikkeln der Spule erfolgen, wobei das Modul bis zum Spulenkörper aufgesteckt und danach die Spule mit den Wicklungsenden an den die Öffnungen des Brückenmoduls überragenden Leiterstegenden gewickelt wird. in einem eventuell nachfolgenden Lötprozeß können die erforderlichen elektrischen Verbindungen zwischen den einzelnen Komponenten hergestellt oder verstärkt werden.

In einer in Fig. 9 skizzierten Ausführungsform erfolgt das klemmende Aufstekken des Moduls nach dem Wickeln der Spule und das Modul wird mit den Öffnungen LF der Metallflächen MFA bzw. MFB nicht bis zum Spulenkörper geschoben, so daß ein spulenkörperseitiger Abschnitt der Leitertsegenden mit den Wicklungsenden des Spulendrahts vom Aufstecken unberührt bleibt. Vorteilhafterweise sind die Aufwölbungen in den Metallflächen MFA, MFB von der Seite der Elektronikbaugruppe weggerichtet und beim Aufstecken die Elektronikbaugruppe EB dem Spulenkörper SK zugewandt.

Beim Aufbau von Brückenmodulen nach Fig. 6 sind paarweise zugeordnete Metallfächen MFA, MFB in Laufrichtung des Lead-Frame-Bandes benachbart. Wird der Folgeabstand von Metallflächenpaaren gleich dem Folgeabstand von Spulenkörpern der Anordnung nach Fig. 2 gewählt, so können u.U. die Brükkenmodule vor Auftrennen des Bandverbundes fortlaufend auf die Leiterstegenden aufgesteckt werden. Die Auflösung des Bandverbundes erfolgt wieder durch Auftrennen entlang der Trennlinien TL.

Bei der Anordnung nach Fig. 7 sind die Öffnungen in den Metallflächen als Klemmschlitze KS1 bzw. KS2 in verschiedener Ausformung vorgesehen. Die länglichen Klemmschlitze verlaufen in Bandlaufrichtung, wodurch Fertigungstoleranzen in Ausrichtung und Abstand der Leiterstegenden auf einfache Weise bewältigt werden können.

Eine erste Klemmschlitzausformung KS1 sieht beispielsweise einen länglichen Schlitz vor, bei welchem lediglich die in Schlitzlängsrichtung verlaufenden Kanten aufgewölbt sind und quer zur Längsrichtung die lichte Schlitzbreite ein Untermaß gegen die Ausdehnung der Leiterstegenden in dieser Richtung zeigen. Bezüglich der Mechanismen beim Aufstecken sei auf die Ausführungen von Fig. 5 und Fig. 8 verwiesen, die entsprechend gelten.

Eine andere Klemmschlitzausformung KS2 sieht vor, den Schlitz wesentlich länger zu gestalten als zum Ausgleich von Fertigungstoleranzen erforderlich und den Klemmschlitz eventuell auch bis zum dem Spalt G abgewandten Rand der Metallfläche zu führen. Auf eine Voraufwölbung der Schlitzränder kann dann u.U. verzichtet werden. Eine Aufwölbung ergibt sich beim Aufstecken dann von selbst.

Eine weitere Variante einer direkten Kontaktierung der Leiterstegenden ist in Fig. 10 skizziert. Dabei wird die Elektronikbaugruppe EB auf dem Spulenkörper SK mit vom Spulenkörper wegweisenden Kontakt-Leiterflächen befestigt, beispielsweise aufgeklebt und die Leiterstegenden werden umgebogen und mit den Leiterflächen der Elektronikbaugruppe elektrisch verbunden. Zur erleichterten Umbiegung können die Leiterstegenden LV einen verringerten Querschnitt aufweisen.

In Fig. 10 ist ein weiteres, in verschiedenen Ausführungsformen der Erfindung vorteilhaftes Merkmal skizziert, gemäß welchem die Elektronikbaugruppe und die Kontaktbereiche mit den Leiterstegenden von einem Tropfen ausgehärtetem Vergußmetarials VM umgeben und dadurch geschützt und fixiert sind.

In Fig. 11 ist eine weitere Variante der elektrischen Verbindung der Leiterstege LSA, LSB mit Leiterflächen der Elektronikbaugruppe EB durch klemmend auf die Leiterstegenden aufgesteckte Federkontakte FK skizziert, die mit Federzungen auf Leiterflächen der Elektronikbaugruppe, die mit dem Spulenkörper abgewandten Leiterflächen auf diesem befestigt ist, aufliegen.

Anstelle des Vergußmaterialtropfens nach Fig. 10 sieht die Ausführung nach Fig. 11 den Schutz der Anordnung durch ein aufzusteckendes topfförmiges Gehäuse H vor, wobei am Topfboden des Gehäuses ein aushärtbares Vergußmaterial VM eingebracht wird, welches beim Aufstecken des Gehäuses den dem Topfboden zugewandten Teil der Anordnung umfließt und beim Aushärten fixiert.

Die vorstehend und in den Ansprüchen angegebenen Merkmale sind sowohl einzeln als auch in verschiedenen Kombinationen vorteilhaft realisierbar. Die Erfindung ist nicht auf die beschriebenen Ausführungsbeispiele beschränkt. Insbesondere sind bei Ausgestaltung der Kontaktfahnen und der Brückenmodule eine Vielzahl von Formen denkbar. Für mehr als zweipoligen Verbindungen von Spulen und Elektronikbaugruppen, beispielsweise bei mehrteiliger Spule, sind die gegebenen Ausführungsbeispiele entsprechend abzuwandeln.

## Patentansprüche

1. Transponderanordnung mit einer als Drahtwicklung auf einen Spulenkörper (SK) ausgeführten Spule (SP) mit Wicklungsenden (WEA, WEB) und einer Transponder-Elektronikbaugruppe (EB), wobei Spule und Transponder-Elektronikbaugruppe mit jeweils zwei Polen unter Zwischenschaltung leitender Kontakte elektrisch miteinander verbunden sind, **dadurch gekennzeichnet, daß** als leitende Kontakte zwei elektrisch getrennte Leiterstege (LSA, LSB) in dem Spulenkörper mechanisch verankert sind und aus dem Spulenkörper herausragen, daß die Wicklungsenden (WEA, WEB) mit den Leiterstegen kontaktiert sind und daß die Elektronikbaugruppe mit den Leiterstegen direkt oder über ein Brückenmodul (MFA, MFB) kontaktiert ist.

2. Anordnung nach Anspruch 1, **dadurch gekennzeichnet, daß** die Elektronikbaugruppe zur elektrischen Kontaktierung metallische Leiterflächen (LF) auf einem isolierenden Substrat aufweist.

3. Anordnung nach Anspruch 1 oder 2, **dadurch gekennzeichnet, daß** die Leiterstege Kontaktfahnen (KF) aufweisen und die Elektronikbaugruppe (EB) mit den Kontaktfahnen kontaktiert ist.

4. Anordnung nach Anspruch 1 oder 2, **dadurch gekennzeichnet, daß** die Elektronikbaugruppe (EB) mit dem Brückenmodul (MFA, MFB) und dieses mit den Leiterstegen kontaktiert ist.

5. Anordnung nach einem der Ansprüche 1 bis 4, **dadurch gekennzeichnet, daß** das Brückenmodul (MFA, MFB) die Leiterstege (LSA, LSB) klemmend kontaktiert.

6. Anordnung nach einem der vorhergehenden Ansprüche, **dadurch gekennzeichnet, daß** die Elektronikbaugruppe (EB) an dem Spulenkörper (SK) anliegt.

7. Anordnung nach Anspruch 6, **dadurch gekennzeichnet, daß** das Brückenmodul mit Federkontakten (FZ) an Kontaktflächen der Elektronikbaugruppe (EB) anliegt (Fig. 11).

8. Anordnung nach Anspruch 6, **dadurch gekennzeichnet, daß** die Leiterstege (LV) umgebogen und mit der Elektronikbaugruppe kontaktiert sind (Fig. 10).

9. Anordnung nach einem der vorhergehenden Ansprüche, **dadurch gekennzeichnet, daß** die Elektronikbaugruppe (EB) durch Vergußmaterial (VM) umgeben ist

10. Anordnung nach einem der vorhergehenden Ansprüche, **dadurch gekennzeichnet, daß** Spule und Elektronikbaugruppe gemeinsam in einem Gehäuse (H) untergebracht sind.

11. Anordnung nach einem der vorhergehenden Ansprüche, **dadurch gekennzeichnet, daß** die Leiterstege (LSA1, LSA2, LSB1, LSB2) beidseitig über den Spulenkörper (SK) hinausragen.

12. Anordnung nach Anspruch 11, **dadurch gekennzeichnet, daß** Spulenenden (WEA, WEB) und Elektronikbaugruppe (EB) mit verschiedenen Enden der Leiterstege verbunden sind.

13. Anordnung nach einem der vorhergehenden Ansprüche, **dadurch gekennzeichnet, daß** ein Kondensator in der Elektronikbaugruppe (EB) integriert ist.

14. Anordnung nach einem der Ansprüche 1 bis 12, **dadurch gekennzeichnet, daß** ein Kondensator (C) zusätzlich zu der Elektronikbaugruppe vorgesehen und separat mit den Leiterstegen (LSA, LSB) oder dem Brückenmodul (MFA, MFB) verbunden ist.

15. Anordnung nach einem der vorhergehenden Ansprüche, **dadurch gekennzeichnet, daß** der Spulenkörper (SK) ein Kunststoff-Gußkörper ist, welcher die Leiterstege (LSA, LSB) umschließt.

16. Anordnung nach einem der vorhergehenden Ansprüche, **dadurch gekennzeichnet, daß** der Spulenkörper einen Aufnahmeraum (AR) mit einem Ferritkörper (FK) enthält.

17. Anordnung nach einem der vornergehenden Ansprüche, **dadurch gekennzeichnet, daß** die Leiterstege (LSA, LSB) zur mechanischen Befestigung der Anordnung auf einer Trägerplatte eingesetzt sind.

18. Anordnung nach einem der vorhergehenden Ansprüche, **dadurch gekennzeichnet, daß** über die Leiterstege (LSA, LSB) eine elektrische Verbindung mit anderen elektrischen Baugruppen besteht.

19. Verfahren zur Herstellung einer Transponderanordnung mit einer Transponder-Elektronikbaugruppe und einer Spule mit Wicklungsenden (WEA, WEB), welche mit wenigstens jeweils zwei Polen unter Zwischenschaltung leitender Kontakte elektrisch miteinander verbunden werden, **gekennzeichnet durch** die Verfahrensschritte
a) zwei Leiterstege (LSA, LSB) werden mechanisch in einem Spulenkörper (SK) so verankert, dass sie aus diesem herausragen;
b) eine Spule (SP) wird auf den Spulenkörper (SK) gewickelt und die Wicklungsenden (WEA, WEB) werden mit den Leiterstegen kontaktiert;
c) die Transponder-Elektronikbaugruppe wird direkt oder über ein Brückenmodul mit den Leiterstegen kontaktiert.

20. Verfahren nach Anspruch 19, **dadurch gekennzeichnet, daß** der Spulenkörper (SK) um die Leiterstege (LSA, LSB) als Gußkörper geformt wird.

21. Verfahren nach Anspruch 19 oder 20, **dadurch gekennzeichnet, daß** die Leiterstege (LSA, LSB) als Lead-Frame-Band zugeführt werden (Fig. 6, Fig. 7).

22. Verfahren nach einem der Ansprüche 19 bis 21, **dadurch gekennzeichnet, daß** die Elektronikbaugruppe (EB) direkt mit Kontaktfahnen (KF) der Leiterstege kontaktiert wird.

23. Verfahren nach einem der Ansprüche 19 bis 23, **dadurch gekennzeichnet, daß** elektrische Lötverbindungen an Spulenenden und Elektronikbaugruppe in einem gemeinsamen Lötvorgang hergestellt werden.

24. Verfahren nach einem der Ansprüche 19 bis 23, **dadurch gekennzeichnet, daß** nach Herstellung des Spulenkörpers Brückenmodule auf freie Leiterstegenden aufgesteckt und danach die Spule gewickelt und die Spulenenden mit den über die Brückenmodule überstehenden Leiterstegenden verbunden werden.

25. Verfahren nach einem der Ansprüche 19 bis 23, **dadurch gekennzeichnet, daß** Brückenmodule nach Wickeln der Spule auf Leiterstegenden aufgesteckt werden.

26. Verfahren nach einem der Ansprüche 19 bis 25, **dadurch gekennzeichnet, daß** in Metallfahnen der Brückenmodule Öffnungen (OF) mit Untermaß gegenüber den Leiterstegen eingebracht werden.

27. Verfahren nach Anspruch 26, **dadurch gekennzeichnet, daß** die Ränder der Öffnungen aufgewölbt werden.

28. Verfahren nach einem der Ansprüche 19 bis 27, **dadurch gekennzeichnet, daß** in ein Gehäuse (H) eine Vergußmasse (VM) eingebracht, die Spule mit Elektronikbaugruppe in das Gehäuse eingesetzt und die Vergußmasse verfestigt wird.

## Claims

1. Transponder arrangement with a coil (SP), formed as a wire winding on a coil former (SK) and having winding ends (WEA, WEB), and a transponder electronic unit (EB), the coil and the transponder electronic unit being electrically connected to each other by two poles in each case, with conducting contacts interposed, **characterized in that** two electrically separate conducting arms (LSA, LSB) are mechanically anchored in the coil former as conducting contacts and protrude from the coil former, **in that** the winding ends (WEA, WEB) are contacted by the conducting arms and **in that** the electronic unit is contacted by the conducting arms directly or via a bridge module (MFA, MFB).

2. Arrangement according to Claim 1, **characterized in that** the electronic unit has metallic conducting areas (LF) on an insulating substrate for the electrical contacting.

3. Arrangement according to Claim 1 or 2, **characterized in that** the conducting arms have contact tabs (KF) and the electronic unit (EB) is contacted by the contacts tabs.

4. Arrangement according to Claim 1 or 2, **characterized in that** the electronic unit (EB) is contacted by the bridge module (MFA, MFB) and the latter is contacted by the conducting arms.

5. Arrangement according to one of Claims 1 to 4, **characterized in that** the bridge module (MFA, MFB) contacts the conducting arms (LSA, LSB) in a clamping manner.

6. Arrangement according to one of the preceding claims, **characterized in that** the electronic unit (EB) bears against the coil former (SK).

7. Arrangement according to Claim 6, **characterized in that** the bridge module bears with spring-loaded contacts (FZ) against contact areas of the electronic unit (EB) (Figure 11).

8. Arrangement according to Claim 6, **characterized in that** the conducting arms (LV) are bent around and contacted by the electronic unit (Figure 10).

9. Arrangement according to one of the preceding claims, **characterized in that** the electronic unit (EB) is surrounded by encapsulating material (VM).

10. Arrangement according to one of the preceding claims, **characterized in that** the coil and the electronic unit are accommodated together in a housing (H).

11. Arrangement according to one of the preceding claims, **characterized in that** the conducting arms (LSA1, LSA2, LSB1, LSB2) protrude on both sides beyond the coil former (SK).

12. Arrangement according to Claim 11, **characterized in that** the coil ends (WEA, WB) and the electronic unit (EB) are connected to different ends of the conducting arms.

13. Arrangement according to one of the preceding claims, **characterized in that** a capacitor is integrated in the electronic unit (EB).

14. Arrangement according to one of Claims 1 to 12, **characterized in that** a capacitor (C) is provided in addition to the electronic unit and is separately connected to the conducting arms (LSA, LSB) or the bridge module (MFA, MFB).

15. Arrangement according to one of the preceding claims, **characterized in that** the coil former (SK) is a plastic moulding which encloses the conducting arms (LSA, LSB).

16. Arrangement according to one of the preceding claims, **characterized in that** the coil former contains a receiving space (AR) with a ferrite body (FK).

17. Arrangement according to one of the preceding claims, **characterized in that** the conducting arms (LSA, LSB) are used for the mechanical attachment of the arrangement on a carrier plate.

18. Arrangement according to one of the preceding claims, **characterized in that** an electrical connection with other electrical units exists via the conducting arms (LSA, LSB).

19. Method for producing a transponder arrangement, with a transponder electronic unit and a coil with winding ends (WEA, WEB), which are electrically connected to each other by at least two poles in each case, with conducting contacts interposed, **characterized by** the method steps
a) two conducting arms (LSA, LSB) are mechanically anchored in a coil former (SK) in such a way that they protrude from the latter;
b) a coil (SP) is wound onto the coil former (SK) and the winding ends (WEA, WEB) are contacted by the conducting arms;
c) the transponder electronic unit is contacted by the conducting arms directly or via a bridge module.

20. Method according to Claim 19, **characterized in that** the coil former (SK) is formed around the conducting arms (LSA, LSB) as a moulding.

21. Method according to Claim 19 or 20, **characterized in that** the conducting arms (LSA, LSB) are supplied as a leadframe tape (Figure 6, Figure 7).

22. Method according to one of Claims 19 to 21, **characterized in that** the electronic unit (EB) is contacted directly by contact tabs (KF) of the conducting arms.

23. Method according to one of Claims 19 to 23, **characterized in that** electrical soldered connections are produced at the coil ends and the electronic unit in a joint soldering operation.

24. Method according to one of Claims 19 to 23, **characterized in that**, after producing the coil former, bridge modules are fitted onto free ends of the conducting arms and, after that, the coil is wound and the coil ends are connected to the ends of the conducting arms projecting beyond the bridge modules.

25. Method according to one of Claims 19 to 23, **characterized in that** bridge modules are fitted onto ends of conducting arms after winding of the coil.

26. Method according to one of Claims 19 to 25, **characterized in that** openings (OF) with undersize with respect to the conducting arms are made in metal tabs of the bridge modules.

27. Method according to Claim 26, **characterized in that** the rims of the openings are convexly curved.

28. Method according to one of Claims 19 to 27, **characterized in that** an encapsulating compound (VM) is introduced into a housing (H), the coil with the electronic unit is inserted into the housing and the encapsulating compound is solidified.

## Revendications

1. Dispositif transpondeur comprenant une bobine (SP) avec des extrémités d'enroulement (WEA, WEB) réalisée sous la forme de l'enroulement d'un fil sur un corps de bobine (SK) et un module électronique transpondeur (EB), la bobine et le module électronique transpondeur étant reliés électriquement entre eux à chaque fois avec deux pôles en intercalant des contacts électriques, **caractérisé en ce que** deux barrettes conductrices (LSA, LSB) électriquement séparées sont ancrées mécaniquement dans le corps de bobine pour faire office de contacts électriques et dépassent du corps de bobine, que les extrémités d'enroulement (WEA, WEB) sont en contact avec les barrettes conductrices et que le module électronique est en contact avec les barrettes conductrices directement ou par le biais d'un module de pontage (MFA, MFB).

2. Dispositif selon la revendication 1, **caractérisé en ce que** le module électronique, pour établir le contact électrique, présente des surfaces conductrices (LF) métalliques sur un substrat isolant.

3. Dispositif selon la revendication 1 ou 2, **caractérisé en ce que** les barrettes conductrices présentent des languettes de contact (KF) et le module électronique (EB) est en contact avec les languettes de contact.

4. Dispositif selon la revendication 1 ou 2, **caractérisé en ce que** le module électronique (EB) est en contact avec le module de pontage (MFA, MFB) et celui-ci est en contact avec les barrettes conductrices.

5. Dispositif selon l'une des revendications 1 à 4, **caractérisé en ce que** le module de pontage (MFA, MFB) établit le contact avec les barrettes conductrices (LSA, LSB) en les serrant.

6. Dispositif selon l'une des revendications précédentes, **caractérisé en ce que** le module électronique (EB) repose sur le corps de bobine (SK).

7. Dispositif selon la revendication 6, **caractérisé en ce que** le module de pontage repose sur les surfaces de contact du module électronique (EB) avec des contacts à ressort (FZ) (figure 11).

8. Dispositif selon la revendication 6, **caractérisé en ce que** les barrettes conductrices (LV) sont recourbées et en contact avec le module électronique (figure 10).

9. Dispositif selon l'une des revendications précédentes, **caractérisé en ce que** le module électronique (EB) est entouré de matériau de scellement (VM).

10. Dispositif selon l'une des revendications précédentes, **caractérisé en ce que** la bobine et le module électronique sont logés ensemble dans un boîtier (H).

11. Dispositif selon l'une des revendications précédentes, **caractérisé en ce que** les barrettes conductrices (LSA1, LSA2, LSB1, LSB2) dépassent des deux côtés du corps de bobine (SK).

12. Dispositif selon la revendication 11, **caractérisé en ce que** les extrémités de la bobine (WEA, WEB) et le module électronique (EB) sont reliés à des extrémités différentes des barrettes conductrices.

13. Dispositif selon l'une des revendications précédentes, **caractérisé en ce qu'**un condensateur est intégré dans le module électronique (EB).

14. Dispositif selon l'une des revendications 1 à 12, **caractérisé en ce qu'**un condensateur (C) est prévu en plus du module électronique et qu'il est relié séparément avec les barrettes conductrices (LSA, LSB) ou le module de pontage (MFA, MFB).

15. Dispositif selon l'une des revendications précédentes, **caractérisé en ce que** le corps de bobine (SK) est un corps moulé en matière plastique qui entoure les barrettes conductrices (LSA, LSB).

16. Dispositif selon l'une des revendications précédentes, **caractérisé en ce que** le corps de bobine comprend un espace de logement (AR) avec un corps en ferrite (FK).

17. Dispositif selon l'une des revendications précédentes, **caractérisé en ce que** les barrettes conductrices (LSA, LSB) sont utilisées pour la fixation mécanique du dispositif sur une plaque support.

18. Dispositif selon l'une des revendications précédentes, **caractérisé en ce qu'**une liaison électrique avec d'autres modules électriques est établie par le biais des barrettes conductrices (LSA, LSB).

19. Méthode de fabrication d'un dispositif transpondeur comprenant un module électronique transpondeur et une bobine avec des extrémités d'enroulement (WEA, WEB), lesquels sont reliés électriquement entre eux à chaque fois avec au moins deux pôles en intercalant des contacts électriques, **caractérisée par** les étapes de procédé consistant à
a) ancrer mécaniquement deux barrettes conductrices (LSA, LSB) dans un corps de bobine (SK) de manière à ce qu'elles dépassent de celui-ci ;
b) enrouler une bobine (SP) sur le corps de bobine (SK) et mettre les extrémités d'enroulement (WEA, WEB) en contact avec les barrettes conductrices ;
c) mettre le module électronique transpondeur en contact avec les barrettes conductrices directement ou par le biais d'un module de pontage.

20. Méthode selon la revendication 19, **caractérisée en ce que** le corps de bobine (SK) est formé autour des barrettes conductrices (LSA, LSB) sous la forme d'un corps moulé.

21. Méthode selon la revendication 19 ou 20, **caractérisée en ce que** les barrettes conductrices (LSA, LSB) sont amenées sous la forme d'une bande lead-frame (figure 6, figure 7).

22. Méthode selon l'une des revendications 19 à 21, **caractérisée en ce que** le module électronique (EB) est en contact direct avec les languettes de contact (KF) des barrettes conductrices.

23. Méthode selon l'une des revendications 19 à 23, **caractérisée en ce que** les liaisons électriques soudées sur les extrémités de la bobine et le module électronique sont réalisées au cours d'une opération de soudage commune.

24. Méthode selon l'une des revendications 19 à 23, **caractérisée en ce qu'**après la fabrication du corps de bobine, des modules de pontage sont enfichés sur les extrémités libres des barrettes conductrices et la bobine est enroulée ensuite et les extrémités de la bobine sont reliées avec les extrémités des barrettes conductrices qui dépassent des modules de pontage.

25. Méthode selon l'une des revendications 19 à 23, **caractérisée en ce que** des modules de pontage sont enfichés sur les extrémités des barrettes conductrices après l'enroulement de la bobine.

26. Méthode selon l'une des revendications 19 à 25, **caractérisée en ce que** des orifices (OF) de dimensions inférieures à celles des barrettes conductrices sont aménagés dans les languettes métalliques des modules de pontage.

27. Méthode selon la revendication 26, **caractérisée en ce que** les bords des orifices sont bombés.

28. Méthode selon l'une des revendications 19 à 27, **caractérisée en ce qu'**une masse de scellement (VM) est introduite dans un boîtier (H), la bobine avec le module électronique est insérée dans le boîtier et la masse de scellement est solidifiée.
